# EUROPEAN PATENT SPECIFICATION

(11) **EP 1 599 416 B1**
(45) Date of publication and mention of the grant of the patent: **15.10.2014**
(21) Application number: 04716399.3
(22) Date of filing: 02.03.2004
(51) Int. Cl.: C01B 11/02, B01J 14/00, B01J 4/00, B01J 19/24

(54) **PROCESS FOR PRODUCING CHLORINE DIOXIDE**
VERFAHREN ZUR HERSTELLUNG VON CHLORDIOXID
PROCEDE DE PRODUCTION DE DIOXYDE DE CHLORE

(30) Priority: 03.03.2003 US 376261
(43) Date of publication of application: 30.11.2005
(73) Proprietor: Akzo Nobel N.V., 6800 SB Arnhem (NL); Akzo Nobel Pulp and Performance Chemicals AB, 445 80 Bohus (SE)
(72) Inventor: WOODRUFF, Thomas, Marietta, Georgia GA 30066 (US); JEFFERSON, James, Dallas, GA 30157 (US)
(74) Representative: Chalk, Anthony John
(86) International application number: PCT/SE2004/000282
(87) International publication number: WO 2004/078648

(56) References cited:
- WO-A-02/053277
- WO-A-03/000586
- FR-A- 775 211
- US-A- 5 376 350
- US-A1- 2003 031 621
- J. TENNY ET AL.: "Froth reactor for small-scale generation of chlorine dioxide" AICHE JOURNAL, vol. 43, no. 8, August 1997 (1997-08), pages 2148-2152, XP008030904 USNEW YORK, NY

## Description

### Field of the invention

The present invention relates to a process and an apparatus for producing chlorine dioxide from a mineral acid, alkali metal chlorate and hydrogen peroxide.

### Background of the invention

Chlorine dioxide is used in various applications such as pulp bleaching, fat bleaching, water purification and removal of organic materials from industrial wastes. Since chlorine dioxide is not storage stable, it must be produced on-site.

Chlorine dioxide can be produced by reacting alkali metal chlorate and a mineral acid, preferably sulfuric acid, with a reducing agent in an aqueous reaction medium. For production in small-scale units, such as for water purification applications or small bleaching plants, it is favourable not to separate chlorine dioxide gas from the reaction medium but to recover a chlorine dioxide containing solution directly from the reactor, optionally after dilution with water. Such processes are described in US patents 2833624, 4534952, 5895638, WO 00/76916, and WO 03/000586. A similar process is described in US Patent Application Pub. No. 2003/0031621, teaching that the reactants should be injected into a spherical reaction chamber.

Experience from commercial operation has shown that the way of feeding and mixing the chemicals affects the efficiency of the process. It has until now been believed that the optimal way of operating the process is to use a substantially vertical reactor in which a disk or the like provided with apertures is arranged, wherein a premixed solution of alkali metal chlorate and hydrogen peroxide is fed above the disk, while sulfuric acid is fed below the disk and brought to flow through the apertures and then mix with the alkali metal chlorate and the hydrogen peroxide. Such an arrangement is described In WO 03/000586.

It is desirable to use sulfuric acid of high concentration, preferably above about 90 wt%, since this sulfuric acid is both less corrosive and more readily available on the market than more diluted grades. However, unless the chlorine dioxide production is very low, it has been found that if sulfuric acid of high concentration is used it is difficult to achieve stable operation without frequent decomposition of chlorine dioxide.

### Summary of the invention

It is an object of the invention to provide a process for the production of chlorine dioxide that can be operated without substantial decomposition of chlorine dioxide.

It is another object of the invention to provide a process for the production of chlorine dioxide in which sulfuric acid of high concentration can be used.

It is still another object of the invention to provide an apparatus useful for the above purposes.

### Brief description of the invention

It has surprisingly been found possible to meet these objects by providing a process for continuously producing chlorine dioxide comprising the steps of:
diluting sulfuric acid of an initial concentration exceeding about 90 wt% with water, to a concentration from about 60 to about 90 wt%, preferably from about 65 to about 88 wt%;
bringing the diluted sulfuric acid to a temperature below about 100°C, preferably to a temperature from about 5 to about 95°C, most preferably from about 30 to about 65°C; feeding to a reactor the diluted sulfuric acid having a temperature below about 100°C, preferably from about 5 to about 95°C, most preferably from about 30 to about 65°C, through a first feeding nozzle;
feeding to said reactor an aqueous solution comprising alkali metal chlorate and hydrogen peroxide through a second feeding nozzle, wherein said first and second feeding nozzles are opposite to and directed against each other;
reacting the alkall metal chlorate with the mineral acid and the hydrogen peroxide to form a product stream containing chlorine dioxide; and,
withdrawing the product stream from the reactor, and wherein the reactor is as substantially tubular through-flow vessel or pipe.

Preferably the product stream withdrawn from the reactor is brought to an eductor connected to an outlet of the reactor, creating a suction force bringing the product stream, including any liquid, foam and gas therein, to flow into the eductor and mix with motive water to form a diluted solution containing chlorine dioxide. Any suitable type of eductor can be used, such as those described in WO 03/000586.

The dilution of the sulfuric acid can be achieved by any means where it is blended with water, of which a static mixer is particularly preferred. If the temperature of the sulfuric acid after dilution exceed about 100°C, cooling is necessary, which can be achieved in any conventional manner for removing thermal energy. It has been found particularly advantageous to use a heat exchanger in which a slip stream of motive water for the eductor serves as a cooling medium. Preferably from about 1 to about 6 kg H₂SO₄, most preferably from about 2 to about 4 kg H₂SO₄ is fed per kg ClO₂ produced.

The reactor is a substantially tubular through-flow vessel or pipe. The first and second feeding nozzles are then suitably situated close to one end of the reactor while the product stream is withdrawn at the other end. Preferably the first and second feeding nozzles are situated at opposite sides of and directed towards the centre line along the reactor, i.e. towards the centre of the cross-section of the reactor. Although not necessary, it is possible to use further feeding nozzles for sulfuric acid and a solution of alkali metal chlorate and hydrogen peroxide. The reactor may also be provided with nozzles for flushing and draining during maintenance. Most preferably the reactor is arranged substantially vertically with the first and second feeding nozzles preferably situated close to the bottom thereof so the main flow-direction through, the reactor is upwards and the product stream is withdrawn at the top thereof.

The length (in the main flow direction) of the reactor used is preferably from about 50 to about 800 mm, most preferably from about 200 to about 650 mm. It has been found favourable to use a substantially tubular reactor with an inner diameter from about 25 to about 300 mm, preferably from about 70 to about 200 mm. It is particularly favourable to use a substantially tubular reactor having a preferred ratio of the length to the inner diameter from about 12:1 to about 1:1, most preferably from about 8:1 to about 4:1. A suitable average residence time in the reactor is in most cases from about 1 to about 1000 seconds, preferably from about 2 to about 40 seconds.

The aqueous solution comprising alkali metal chlorate and hydrogen peroxide fed through the second feeding nozzle may have a composition as described in WO 00/76916, which hereby is incorporated by reference. Such a composition may be an aqueous solution comprising from about 1 to about 6.5 moles/liter, preferably from about 3 to about 6 moles/liter of alkali metal chlorate, from about 1 to about 7 moles/liter, preferably from about 3 to about 5 moles/liter of hydrogen peroxide and at least one of a protective colloid, a radical scavenger or a phosphonic acid based complexing agent, wherein the pH of the aqueous solution suitably is from about 0.5 to about 4, preferably from about 1 to about 3.5, most preferably from about 1.5 to about 3. Preferably, at least one phosphonic acid based complexing agent is present, preferably in an amount from about 0.1 to about 5 mmoles/liter, most preferably from about 0.5 to about 3 mmoles/liter. If a protective colloid is present, its concentration is preferably from about 0.001 to about 0.5 moles/liter, most preferably from about 0.02 to about 0.05 moles/liter. If a radical scavenger is present, its concentration is preferably from about 0.01 to about 1 moles/liter, most preferably from about 0.02 to about 0.2 moles/liter. Particularly preferred compositions comprise at least one phosphonic acid based complexing agent selected from the group consisting of 1-hydroxyethylidene-1,1-diphosphonic acid, 1-aminoethane-1,1-diphosphonic acid, aminotri (methylenephosphonic acid), ethylene diamine tetra (methylenephosphonic acid), hexamethylene diamine tetra (methylenephosphonic acid), diethylenetriamine penta (methylenephosphonic acid), diethylenetriamine hexa (methylenephosphonic acid), 1-aminoalkane-1,1-diphosphonic acids (such as morpholinomethane diphosphonic acid, N,N-dimethyl aminodimethyl diphosphonic acid, aminomethyl diphosphonic acid), reaction products and salts thereof, preferably sodium salts. Useful protective colloids include tin compounds, such as alkali metal stannate, particularly sodium stannate (Na₂(Sn(OH)₆). Useful radical scavengers include pyridine carboxylic acids, such as 2,6-pyridine dicarboxylic acid. Suitably the amount of chloride ions is below about 300 mmoles/liter, preferably below about 50 mmoles/liter, more preferably below about 5 mmoles/liter, most preferably below about 0.5 mmoles/liter.

The reaction of alkali metal chlorate, mineral acid and hydrogen peroxide results in formation of a product stream in the reactor, normally comprising both liquid and foam and containing chlorine dioxide, oxygen, alkali metal salt of the mineral acid and, in most cases, some remaining unreacted species from the feed chemicals such as alkali metal chlorate and mineral acid. Chlorine dioxide and oxygen may be present both as dissolved in the liquid and as gas bubbles. It has been found possible to achieve a conversion degree of chlorate to chlorine dioxide from about 75% to 100%, preferably from about 80 to 100%, most preferably from about 95 to 100%.

The temperature in the reactor is suitably maintained below the boiling point of the reactants and the product stream at the prevailing pressure, preferably from about 20 to about 80°C, most preferably from about 30 to about 60°C. The pressure maintained within the reactor is suitably slightly subatmospheric, preferably from about 30 to about 100 kPa absolute, most preferably from about 65 to about 95 kPa absolute.

The invention further relates to an apparatus suitable for producing chlorine dioxide according to the above described process. The apparatus comprises means for diluting sulfuric acid, preferably a static mixer, means for cooling the diluted sulfuric acid, preferably a heat exchanger, a reactor in which is arranged a first feeding nozzle for a mineral acid and a second feeding nozzle for an aqueous solution comprising alkali metal chlorate and hydrogen peroxide, wherein said first and second feeding nozzles are opposite to and directed against each other and the reactor further is provided with an outlet for a product stream containing chlorine dioxide.

Preferred embodiments of the apparatus are apparent from the above description of the process and the following description referring to the schematic drawings. The invention is, however, not limited to the embodiments shown in the drawings and encompasses many other variants within the scope of the claims.

### Brief description of the drawings

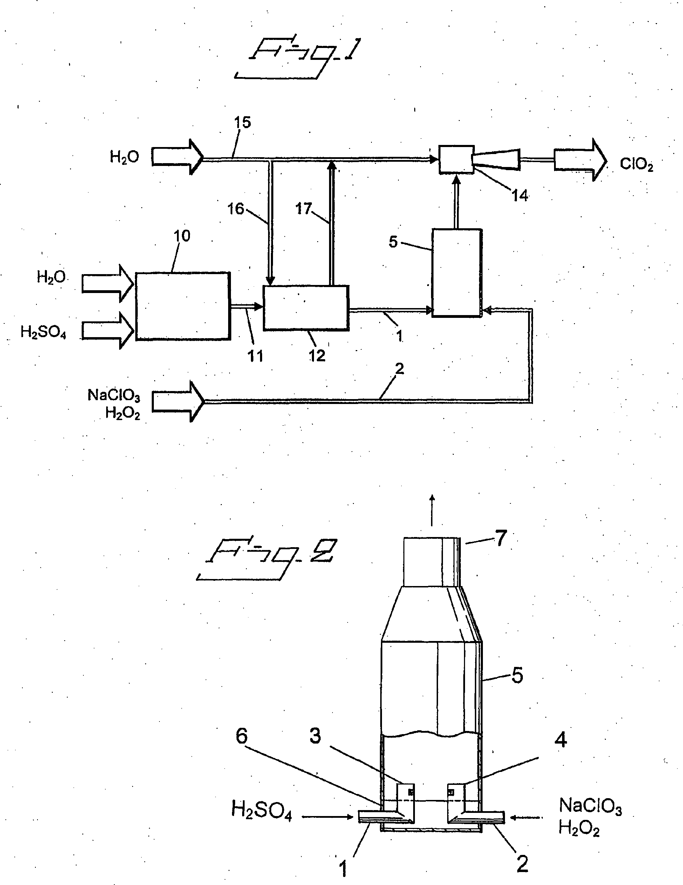

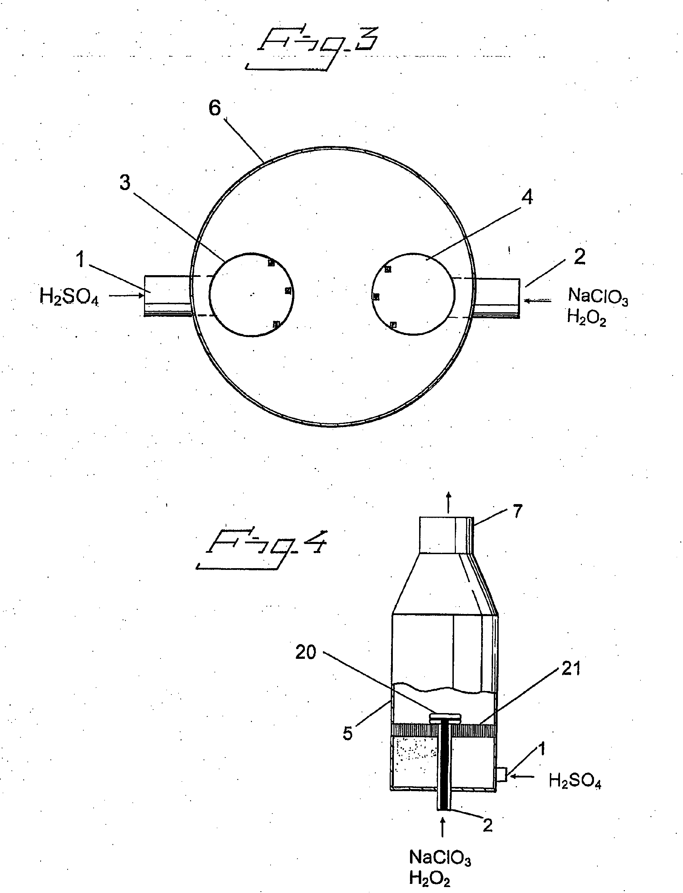

Fig. 1 is a schematic flow sheet of a preferred process of the invention, Fig. 2 schematically shows a side section of a chlorine dioxide reactor of the invention, Fig. 3 schematically shows a top section of the feeding nozzles for the reactor, while Fig. 4 schematically show a chlorine dioxide reactor of the prior art.

### Detailed description of the drawings

Referring to Fig. 1, sulfuric acid of high concentration, e.g. above 90 wt%, and moderate temperature, e.g. from about 0 to about 50°C, is diluted with water in a static mixer 10 to yield a sulfuric acid stream 11 with a concentration from 65 to 88 wt%, and, due to the heat produced by the dilution, generally a temperature from about 95 to about 115°C. The diluted sulfuric acid stream 11 is brought to a heat exchanger 12, in which it preferably is cooled to a to a temperature below about 95°C, most preferably from about 30 to about 65°C. The cooled sulfuric acid stream 1 is then fed to a vertical through-flow tubular reactor 5, to which also a pre-mixed aqueous solution of sodium chlorate and hydrogen peroxide is fed through feed line 2. In the reactor 5 the feed streams are mixed and reacted to form a product stream of liquid, foam and gas comprising chlorine dioxide, oxygen, sodium sulfate and some remaining sulfuric acid and sodium chlorate. An eductor 14 is supplied with motive water through feed line 15 and generates a subatmospheric pressure forcing the product stream out from the reactor 5 and into the eductor 14 where it is mixed with the motive water to form a diluted aqueous product solution. This diluted solution contains chlorine dioxide and the other component from the reactor 5 and is withdrawn as a final product. A slip stream 16 of the motive water 15 is used as cooling medium for the sulfuric acid in the heat exchanger 12. A practical way to provide sufficient driving force for the return 17 of the cooling water is to create a pressure drop, e.g. by the means of an orifice plate (not shown), in the motive water stream 15 between the lines 16 and 17.

Referring to Figs. 2 and 3, an insert 6 is arranged close to the bottom of the reactor 5 and provided with a first feeding nozzle 3 connected to the feed line 1 for sulfuric acid and a second feeding nozzle 4 connected to the feed line 2 for the sodium chlorate / hydrogen peroxide solution. The first and second feeding nozzles 3, 4 are arranged opposite to each other at substantially equal distance from the centre of the cross section of the reactor 5. Each nozzle 3, 4 preferably has a spray pattern from about 20 to about 180 degrees, most preferably from about 60 to about 135 degrees. Preferably the nozzles do not atomize the liquid into individual droplets. The sulfuric acid and the sodium chlorate / hydrogen peroxide solution are sprayed at each other towards the centre of the cross section of the reactor 5. Upon mixture, the reaction generating chlorine dioxide starts and creates a product stream of liquid, foam and gas, which stream is withdrawn through the outlet 7 at the top of the reactor 5 and then brought to the eductor 14 (Fig. 1).

The process equipment, including the reactor 5 and the eductor 14, is suitably made from materials resistant to hydrogen peroxide, sodium chlorate, sulfuric acid and chlorine dioxide. Such materials include, for example, glass, tantalum, titanium, fibreglass reinforced plastic, fluoro plastics like PVDF (polyvinylidene fluoride) CPVC (chlorinated polyvinyl chloride), PTFE (polytetrafluoro ethylene), PFA (perfluoro alkoxy polymer), ECTFE (ethylene chlorotrifluoro ethylene) or FEP (fluorinated ethylene propylene). Alternatively, such materials may be used as a liner material to a structural material like steel or stainless steel. Suitable fluoro plastics are sold under the trademarks Kynar^{®}, Teflon^{®} or Halar^{®}.

Fig. 4 shows an arrangement of the prior art. The reactor 5 as such is identical to the one of Fig. 2, but the means for feeding the chemicals are different. Thus, instead of feeding nozzles opposite to each other, a distribution disk 21 provided with apertures is arranged in the lower part of the reactor 5, but above the inlet from the feed line 1 for sulfuric acid. The feed line 2 for the pre-mixed sodium chlorate and hydrogen peroxide solution ends in a distribution nozzle 20 arranged in the centre of the cross section of the reactor just above the distribution disk. The sodium chlorate and hydrogen peroxide solution is then sprayed over the cross section within the reactor 5, while the sulfuric acid flows upwards through the apertures in the distribution disk 21 and is mixed with the sodium chlorate and hydrogen peroxide above the distribution disk 21. Upon mixture, the reaction generating chlorine dioxide starts and creates a product stream of liquid, foam and gas, which stream is withdrawn through the outlet 7 at the top of the reactor 5. However, this kind of arrangement has been found to give less stable operation than the arrangement of the invention.

The invention is further illustrated through the following example. Unless otherwise stated, all parts and percentages refer to parts and percent by weight.

Example: A process of the invention set up as described in Figs. 1-3 was operated with 93 wt% sulfuric acid and an aqueous solution of 40 wt% sodium chlorate and 10 wt% hydrogen peroxide stabilized with a phosphonic acid based complexing agent (marketed as Purate^{®}, Eka Chemicals Inc.). The 93 wt% sulfuric acid was diluted in the static mixer 10 to 78 wt% and cooled in the heat exchanger 12 to 30°C before feeding into the reactor 5. The opposing feeding nozzles 3, 4 had a spray pattern of 120 degrees and the tubular reactor 5 had a length of 610 mm and a diameter of 76 mm. The reactor 5 was maintained at a temperature of 50°C and a pressure of 50 kPa. Experiments were also made without cooling the diluted sulfuric acid, which then had a temperature of about 104°C when fed into the reactor 5. As a comparison, the process was also run with the same kind of reactor, but provided with feeding means for the sulfuric acid and the sodium chlorate / hydrogen peroxide solution as shown in Fig. 4, i.e. a distribution disk 21 and a distribution nozzle 20. The results appear in the table below:

| **Feeding means** | **Cooling (C) / Dilution (D)** | **ClO₂ Production (lb/hr)** | **Stable Runs Without ClO₂ Decompositions** |
|---|---|---|---|
| Opposing Nozzles | C/D | 35 (15.9 kg/hr) | Yes |
| Opposing Nozzles | C/D | 8 (3.6 kg/hr) | Yes |
| Opposing Nozzles | D | 35 (15.9 kg/hr) | No |
| Opposing Nozzles | D | 8 (3.6 kg/hr) | No |
| Distribution disk | C/D | 35 (15.9 kg/hr) | No |
| Distribution disk | C/D | 8 (3.6 kg/hr) | No |
| Distribution disk | D | 35 (15.9 kg/hr) | No |
| Distribution disk | D | 8 (3.6 kg/hr) | No |

## Claims

1. A process for continuously producing chlorine dioxide comprising the steps of:
diluting sulfuric acid of an initial concentration exceeding about 90 wt% with water to a concentration from about 60 to about 90 wt%;
bringing the diluted sulfuric acid to a temperature below about 100°C;
feeding to a reactor (5) the diluted sulfuric acid having a temperature below about 100°C through a first feeding nozzle (3);
feeding to said reactor (5) an aqueous solution comprising alkali metal chlorate and
hydrogen peroxide through a second feeding nozzle (4), wherein said first and second feeding nozzles (3, 4) are opposite to and directed against each other;
reacting the alkali metal chlorate with the mineral acid and the hydrogen peroxide to form a product stream containing chlorine dioxide; and,
withdrawing the product stream from the reactor (5), and wherein the reactor (5) is a substantially tubular through-flow vessel or pipe.

2. A process as claimed in claim 1, wherein the product stream withdrawn from the reactor (5) is brought to an eductor (14) in which it is diluted with motive water to form an aqueous solution containing chlorine dioxide.

3. A process as claimed in any one of claims 1-2, wherein the diluted sulfuric acid is brought to a temperature from about 5 to about 95°C.

4. A process as claimed in any one of claims 1-3, wherein the sulfuric acid is diluted with water by means of a static mixer (10).

5. A process as claimed in any one of claims 2-4, wherein the diluted sulfuric acid is cooled in a heat exchanger (12) with a slipstream of motive water for the eductor (14) as cooling medium.

6. A process as claimed any one of claims 1-5, wherein first and second feeding nozzles (3, 4) are situated close to one end of the reactor (5) while the product stream is withdrawn at the other end of the reactor (5).

7. A process as claimed in any one of claims 1-6, wherein the reactor (5) is arranged substantially vertically.

8. A process as claimed in claim 7, wherein the first and second feeding nozzles (3, 4) are situated close to the bottom of the reactor (5) so the main flow direction through the reactor (5) is upwards and the product stream is withdrawn at the top of the reactor (5).

9. A process as claimed in any one of claims 1-8, wherein the first and second feeding nozzles (3, 4) are situated at opposite sides of and directed towards the centre line along the reactor (5).

10. Apparatus useful for continuously producing chlorine dioxide comprising means (10) for diluting sulfuric acid, means (12) for cooling the diluted sulfuric acid, a reactor (5) in which is arranged a first feeding nozzle (3) for a mineral acid and a second feeding nozzle (4) for an aqueous solution comprising alkali metal chlorate and hydrogen peroxide, wherein said first and second feeding nozzles (3, 4) are opposite to and directed against each other and the reactor (5) further is provided with an outlet for a product stream containing chlorine dioxide, wherein the reactor (5) is a substantially tubular through-flow vessel or pipe.

## Patentansprüche

1. Verfahren zur kontinuierlichen Erzeugung von Chlordioxid, die folgenden Schritte umfassend:
das Verdünnen von Schwefelsäure mit einer Ausgangskonzentration von mehr als etwa 90 Gew.% mit Wasser bis auf eine Konzentration zwischen etwa 60 und etwa 90 Gew.%;
das Bringen der verdünnten Schwefelsäure auf eine Temperatur von unter etwa 100°C;
das Zuführen der verdünnten Schwefelsäure mit einer Temperatur von unter etwa 100 °C durch eine erste Zufuhrdüse (3) an einen Reaktor (5);
das Zuführen einer wässerigen Lösung an den Reaktor (5), welche Alkalimetallchlorat und Wasserstoffperoxid umfasst, durch eine zweite Zufuhrdüse (4), wobei die erste und die zweite Zufuhrdüse (4) sich gegenüber liegen und zueinander gerichtet sind;
das Reagieren des Alkalimetallchlorats mit der Mineralsäure und dem Wasserstoffperoxid, so dass ein Produktstrom erzeugt wird, der Chlordioxid enthält; und
das Entziehen des Produktstroms von dem Reaktor (5), und wobei der Reaktor (5) ein im Wesentlichen röhrenförmiges Durchflussgefäß oder eine entsprechende Röhre ist.

2. Verfahren nach Anspruch 1, wobei der dem Reaktor (5) entzogene Produktstrom zu einem Ejektor (14) geführt wird, in dem er mit Treibwasser verdünnt wird, so dass eine wässerige Lösung erzeugt wird, die Chlordioxid enthält.

3. Verfahren nach Anspruch 1 oder 2, wobei die verdünnte Schwefelsäure auf eine Temperatur zwischen etwa 5 und etwa 95 °C gebracht wird.

4. Verfahren nach einem der Ansprüche 1 bis 3, wobei die Schwefelsäure durch einen statischen Mischer (10) mit Wasser verdünnt wird.

5. Verfahren nach einem der Ansprüche 2 bis 4, wobei die verdünnte Schwefelsäure in einem Wärmetauscher (12) mit einem Nachstrom Treibwasser für den Ejektor (14) als Kühlmittel gekühlt wird.

6. Verfahren nach einem der Ansprüche 1 bis 5, wobei die ersten und zweiten Zufuhrdüsen (3, 4) nahe an einem Ende des Reaktors (5) angeordnet sind, während der Produktstrom an dem anderen Ende des Reaktors (5) entzogen wird.

7. Verfahren nach einem der Ansprüche 1 bis 6, wobei der Reaktor (5) im Wesentlichen vertikal angeordnet ist.

8. Verfahren nach Anspruch 7, wobei die ersten und zweiten Zufuhrdüsen (3, 4) nahe an der Unterseite des Reaktors (5) angeordnet sind, so dass die Hauptströmungsrichtung durch den Reaktor (5) nach oben verläuft, und wobei der Produktstrom an dem oberen Ende des Reaktors (5) entzogen wird.

9. Verfahren nach einem der Ansprüche 1 bis 8, wobei die ersten und zweiten Zufuhrdüsen (3, 4) auf entgegengesetzten Seiten angeordnet sind und zu der Mittellinie entlang des Reaktors (5) gerichtet sind.

10. Vorrichtung, die nützlich ist für die kontinuierliche Erzeugung von Chlordioxid, mit einer Einrichtung (10) zum Verdünnen von Schwefelsäure, einer Einrichtung (12) zum Kühlen der verdünnten Schwefelsäure, einem Reaktor (5), in dem eine erste Zufuhrdüse (3) für Mineralsäure angeordnet ist, sowie eine weite Zufuhrdüse (4) für eine wässerige Lösung, die Alkalimetallchlorat und Wasserstoffperoxid umfasst, wobei die erste und die zweite Zufuhrdüse (3, 4) sich gegenüber liegen und zueinander gerichtet sind, und wobei der Reaktor (5) ferner mit einem Auslass für einen Chlordioxid enthaltenden Produktstrom versehen ist, wobei der Reaktor (5) ein im Wesentlichen röhrenförmiges Durchflussgefäß oder eine entsprechende Röhre ist.

## Revendications

1. Procédé de production en continu de dioxyde de chlore comprenant les étapes consistant à :
diluer de l'acide sulfurique d'une concentration initiale supérieure à environ 90 % en poids avec de l'eau à une concentration d'environ 60 à environ 90 % en poids ;
amener l'acide sulfurique dilué à une température inférieure à environ 100 °C ;
alimenter un réacteur (5) en acide sulfurique dilué ayant une température inférieure à environ 100 °C à travers une première buse d'alimentation (3) ;
alimenter ledit réacteur (5) en une solution aqueuse comprenant un chlorate de métal alcalin et du peroxyde d'hydrogène à travers une seconde buse d'alimentation (4), dans lequel lesdites première et seconde buses d'alimentation (4) sont en regard l'une de l'autre et dirigées l'une contre l'autre ;
faire réagir le chlorate de métal alcalin avec l'acide minéral et le peroxyde d'hydrogène pour former un flux de produit contenant du dioxyde de chlore ; et,
soutirer le flux de produit provenant du réacteur (5), et dans lequel le réacteur (5) est un récipient ou tuyau à flux traversant sensiblement tubulaire.

2. Procédé selon la revendication 1, dans lequel le flux de produit soutiré du réacteur (5) est amené à un inducteur (14) dans lequel il est dilué avec de l'eau motrice pour former une solution aqueuse contenant du dioxyde de chlore.

3. Procédé selon la revendication 1 ou 2, dans lequel l'acide sulfurique dilué est porté à une température d'environ 5 à environ 95 °C.

4. Procédé selon l'une quelconque des revendications 1 à 3, dans lequel l'acide sulfurique est dilué avec de l'eau à l'aide d'un mélangeur statique (10).

5. Procédé selon l'une quelconque des revendications 2 à 4, dans lequel l'acide sulfurique dilué est refroidi dans un échangeur de chaleur (12) avec un sillage d'eau motrice pour l'inducteur (14) en tant que milieu de refroidissement.

6. Procédé selon l'une quelconque des revendications 1 à 5, dans lequel les première et seconde buses d'alimentation (3, 4) sont situées à proximité d'une extrémité du réacteur (5), tandis que le flux de produit est soutiré à l'autre extrémité du réacteur (5).

7. Procédé selon l'une quelconque des revendications 1 à 6, dans lequel le réacteur (5) est placé sensiblement verticalement.

8. Procédé selon la revendication 7, dans lequel les première et seconde buses d'alimentation (3, 4) sont situées à proximité de la partie inférieure du réacteur (5) de sorte que la direction de flux principale à travers le réacteur (5) est vers le haut et le flux de produit est soutiré au niveau de la partie supérieure du réacteur (5).

9. Procédé selon l'une quelconque des revendications 1 à 8, dans lequel les première et seconde buses d'alimentation (3, 4) sont situées au niveau de côtés opposés à et dirigés vers la ligne médiane le long du réacteur (5).

10. Appareil utile pour la production en continu de dioxyde de chlore comprenant des moyens (10) pour diluer l'acide sulfurique, des moyens (12) pour refroidir l'acide sulfurique dilué, un réacteur (5) dans lequel est placée une première buse d'alimentation (3) pour un acide minéral et une seconde buse d'alimentation (4) pour une solution aqueuse contenant un chlorate de métal alcalin et du peroxyde d'hydrogène, dans lequel lesdites première et seconde buses d'alimentation (3, 4) sont en regard l'une de l'autre et dirigées l'une contre l'autre et le réacteur (5) comprend en outre une sortie pour un flux de produit contenant du dioxyde de chlore, dans lequel le réacteur (5) est un récipient ou tuyau à flux traversant sensiblement tubulaire.
